# EUROPEAN PATENT SPECIFICATION

(11) **EP 4 468 165 B1**
(45) Date of publication and mention of the grant of the patent: **04.03.2026**
(21) Application number: 24177930.5
(22) Date of filing: 24.05.2024
(51) Int. Cl.: G06F 13/40, G06F 13/42, G06F 13/38, H04L 12/40, H05B 47/165, H05B 47/18, H04L 12/403, H05B 45/30

(54) **INFORMATION FEEDBACK METHOD AND SERIAL COMMUNICATION SYSTEM**
INFORMATIONSRÜCKKOPPLUNGSVERFAHREN UND SERIELLES KOMMUNIKATIONSSYSTEM
PROCÉDÉ DE RÉTROACTION D'INFORMATIONS ET SYSTÈME DE COMMUNICATION SÉRIE

(30) Priority: 26.05.2023 CN 202310609377
(43) Date of publication of application: 27.11.2024
(73) Proprietor: Silergy Semiconductor Technology (Hangzhou) Ltd, Hangzhou City, Zhejiang 310051 (CN)
(72) Inventor: YANG, Yuanyu, Hangzhou City, 310051 (CN); XU, Xiaoqiang, Hangzhou City, 310051 (CN); ZHANG, Zongquan, Hangzhou City, 310051 (CN)
(74) Representative: Viering, Jentschura & Partner mbB Patent- und Rechtsanwälte

(56) References cited:
- EP-A1- 2 579 512
- EP-A1- 3 683 689
- US-A1- 2019 086 989

## Description

### TECHNICAL FIELD

The present disclosure relates to the field of power electronics, and in particular, to an information feedback method and a serial communication system.

### BACKGROUND TECHNOLOGY

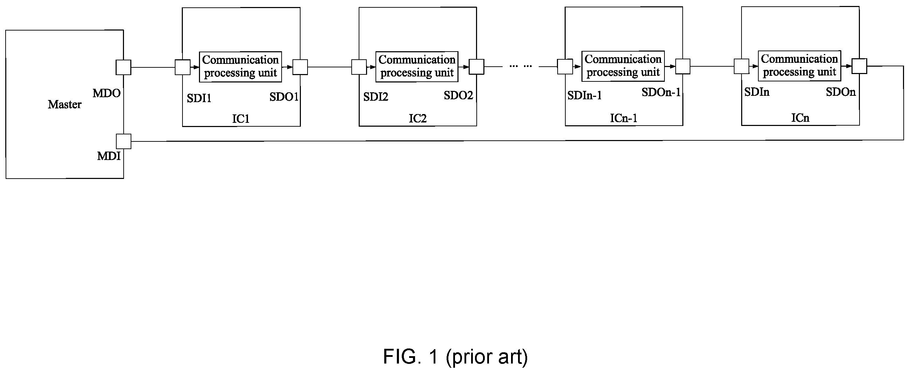

FIG. 1 shows a serial communication system based on traditional technology. The serial communication system includes multiple slave devices and a master device, which are connected in series. Each slave device has at least one input port and at least one output port. The input port of the first slave device is connected to the output port of the master device, and for each of the subsequent slave devices, its input port is connected to the output port of the slave device immediately prior to it. Finally, the output port of the last slave device is connected to the input port of the master device.

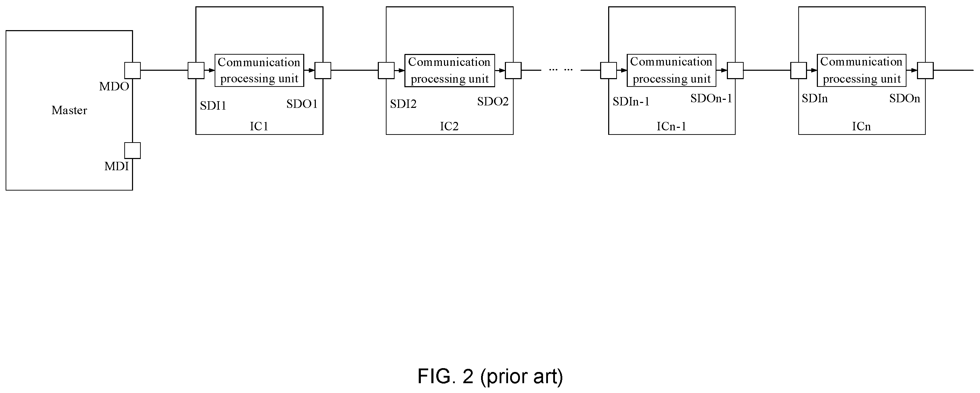

In this configuration, when a slave device needs to transmit information to the master device, it can do so by using the output port of the last slave device to deliver the information to the input port of the master device. However, in some serial communication systems (as shown in FIG. 2), the output port of the last slave device is not connected to the master device, preventing the slave device from providing feedback or transmitting information back to the master device.

Further serial communication systems connecting a master device and a plurality of slave devices in series are set out in EP2579512 A1, US2019/086989 A1 and EP3683689 A1.

### SUMMARY OF THE INVENTION

In view of the above-mentioned shortcomings, the present disclosure provides an information feedback method and a serial communication system, which solve the problem that the slave devices cannot transmit information to the master device when the output port of the last slave device is not connected to the master device.

The invention is set out in the independent claims. Preferred embodiments are defined by the dependent claims.

In one embodiment of the present disclosure, if the determination result shows that the specific information is present in the current slave device, configuring the potential of the first pathway of the current slave device to be at the first level.

In one embodiment of the present disclosure, when a potential of a first pathway of one of the plurality of slave devices is configured to be at the first level within a preset time threshold, configuring a potential of a linked pathway formed by connecting a plurality of first pathways of the communication link in series to be at the first level, such that the master device receives the first level as a first feedback signal. The first feedback signal indicates that the specific information is present in the slave device in the communication link.

In one embodiment of the present disclosure, when none of first pathways of the plurality of slave devices is configured to be at the first level within a preset time threshold, configuring a potential of a linked pathway formed by connecting the first pathways of the plurality of slave devices in series to be maintained at a second level, such that the master device receives the second level as a second feedback signal. The second feedback signal indicates that the specific information is not present in the slave device in the communication link.

In one embodiment of the present disclosure, before determining, by one of the plurality of slave devices whose first pathway is the first to be configured to be at the first level, whether the specific information is present in the slave device, configuring an initial potential of a linked pathway formed by connecting a plurality of first pathways of the communication link in series to be at a second level, such that the potential of the first pathway of the slave device is configured to be at the second level.

Each of the plurality of slave devices further comprises a control unit. When one of the plurality of slave devices is in the first mode, the input port and the output port of the slave device are connected through the control unit, and when one of the plurality of slave devices is in the second mode, the input port and the output port of the slave device are directly connected.

In one embodiment of the present disclosure, when the serial communication system operates in a communication mode, the slave device continuously operates in the first mode or continuously operates in the second mode.

In one embodiment of the present disclosure, when the serial communication system operates in a feedback mode, the current slave device first operates in the first mode to transmit the instruction to the subsequent slave device, and then the current slave device is controlled to operate in the second mode to feed the feedback signal back to the master device.

In one embodiment of the present disclosure, the serial communication system further comprises a pull-up circuit. The pull-up circuit is configured to set an initial potential of a linked pathway formed by connecting a plurality of first pathways of the communication link in series to be at a second level within a preset time threshold. The second level is configured to be at a high level, and the first level is configured to be at a low level.

In one embodiment of the present disclosure, each of the plurality of slave devices further comprises a pull-down unit. The pull-down unit is connected between any node in the first pathway of the corresponding slave device and a ground potential, and if the determination result shows that the specific information is present in the corresponding slave device, the pull-down unit is controlled to pull down the potential of the first pathway of the corresponding slave device to the first level, such that a potential of the linked pathway is pulled down from the high level to the low level, and the master device receives the low level as a first feedback signal. The first feedback signal indicates that the specific information is present in the slave device in the communication link.

In one embodiment of the present disclosure, the pull-down unit comprises a first power switch. The first power switch is connected between any node in the first pathway of the corresponding slave device and the ground potential, and if the determination result shows that the specific information is present in the corresponding slave device, the first power switch is turned on to pull down the potential of the first pathway to the low level; or wherein the pull-down unit comprises a first current source. The first current source is connected between any node in the first pathway of the corresponding slave device and the ground potential, and if the determination result shows that the specific information is present in the corresponding slave device, the first current source operates to pull down the potential of the first pathway to the low level.

In one embodiment of the present disclosure, the serial communication system further comprises a pull-down circuit. The pull-down circuit is configured to set an initial potential of a linked pathway formed by connecting a plurality of first pathways of the communication link in series to be at a second level within a preset time threshold. The second level is configured to be at a low level, and the first level is configured to be at a high level.

In one embodiment of the present disclosure, each of the plurality of slave devices further comprises a pull-up unit. The pull-up unit is connected between any node in the first pathway of the corresponding slave device and a power supply, and if the determination result shows that the specific information is present in the corresponding slave device, the pull-up unit is controlled to pull up the potential of the first pathway of the slave device to the first level, such that a potential of the linked pathway is pulled up from the low level to the high level, and the master device receives the high level as a first feedback signal. The first feedback signal indicates that the specific information is present in the slave device in the communication link.

In one embodiment of the present disclosure, the pull-up unit comprises a first power switch. The first power switch is connected between any node in the first pathway of the corresponding slave device and the power supply, and if the determination result shows that the specific information is present in the corresponding slave device, the first power switch is turned on to pull up the potential of the first pathway to the high level; or wherein the pull-up unit comprises a first current source. The first current source is connected between any node in the first pathway of the corresponding slave device and the power supply, and if the determination result shows that the specific information is present in the corresponding slave device, the first current source operates to pull up the potential of the first pathway to the high level.

In one embodiment of the present disclosure, each of the plurality of slave devices further comprises a mode selection circuit and a control unit. A first end of the mode selection circuit is connected to the input port of the corresponding slave device, a second end of the mode selection circuit is selectively connected to the output port of the corresponding slave device or a first end of the control unit, and a second end of the control unit is connected to the output port of the corresponding slave device; or a first end of the mode selection circuit is connected to the output port of the corresponding slave device, a second end of the mode selection circuit is selectively connected to the input port of the corresponding slave device or a first end of the control unit, and a second end of the control unit is connected to the input port of the corresponding slave device. The mode selection circuit is controlled by the control unit to control the slave device to operate in the first mode or the second mode.

In one embodiment of the present disclosure, the master device transmits the instruction to acquire the specific information and then receives the feedback signal from the slave devices, and when a duration for the master device to receive the feedback signal from the slave devices is greater than a preset time threshold, the slave device is controlled to exit the second mode and operate in the first mode.

In one embodiment of the present disclosure, the master device comprises an input-output multiplexing port, and the input-output multiplexing port is configured to transmit the instruction and receive the feedback signal from the slave device; or wherein the master device comprises an output port and an input port. The output port is configured to transmit the instruction, and the input port is configured to receive the feedback signal from the slave device. The input port and the output port of the master device are both connected to an input port of a first slave device among the plurality of slave devices.

In one embodiment of the present disclosure, the specific information comprises errors to be reported by the slave device; or wherein each of the plurality of slave devices is configured to drive a plurality of LED strings, and the specific information comprises first information indicating that a supply voltage of the plurality of LED strings is insufficient.

In one embodiment of the present disclosure, an output port of a last slave device among the plurality of slave devices is not connected to the master device or an output port of a last slave device among the plurality of slave devices is connected to the master device.

The serial communication system comprises a master device and at least one communication link, the master device and each communication link are connected in series. Each communication link comprises a plurality of slave devices connected in series, and each of the plurality of slave devices comprises an input port and an output port. The serial communication system is configured to apply all method steps of the information feedback method according to any one of the above-mentioned embodiments, multiplexing the serial communication system, to feed a feedback signal back to the master device. The feedback signal indicates whether a specific information is present in the plurality of slave devices in the communication link.

Compared with the existing technology, the present disclosure has the following advantages: the information feedback method is applied to the serial communication system. The serial communication system comprises a master device and at least one communication link, the master and each communication link are connected in series. Each communication link comprises a plurality of slave devices connected in series, and each of the plurality of slave devices comprises an input port and an output port. The information feedback method comprises: transmitting, by the master device, an instruction to acquire specific information, wherein each of the plurality of slave devices when receiving the instruction serves as a current slave device; configuring the current slave device in the communication link in a first mode to receive the instruction from the master device or a previous slave device, and forwarding the instruction to a subsequent slave device; connecting an input port and an output port of the current slave device by controlling the current slave device in a second mode to form a first pathway; and determining, by the current slave device, whether the specific information is present in the current slave device to obtain a corresponding determination result; and based on the determination result, selectively configuring, by the current slave device, a potential of the first pathway of the current slave device to be at a first level, such that the master device receives a feedback signal indicating whether the specific information is present in the slave device in the communication link. This method involves multiplexing the serial communication system to provide the master device the feedback signal indicating whether the specific information is present in the plurality of slave devices in the communication link. These slave devices multiplex the serial communication pathway to transmit the specific information back to the master device, addressing the technical issue where the last slave device cannot transmit signals to the master device when its output port is not connected to the master device. In the context of a serial communication system where the output port of the last slave device is not connected to the master device, the information feedback method of the present disclosure offers significant advantages. By directly connecting the input and output ports of the slave device, important information can be efficiently fed back to the master device, reducing wiring complexity.

### DESCRIPTION OF DRAWINGS

The above and other objects, features, and advantages of the present disclosure will be clearer by referring to the accompanying drawings for the following detailed description of the embodiments of the present disclosure, in which:
FIG. 1 shows a schematic diagram of a serial communication system in the prior art;
FIG. 2 shows a schematic diagram of another communication system in the prior art;
FIG. 3 shows a schematic diagram of a serial communication system of Embodiment 1 of the present disclosure;
FIG. 4 shows a schematic diagram of one of a plurality of slave devices in the serial communication system of Embodiment 1 of the present disclosure; and
FIG. 5 shows a schematic diagram of a serial communication system of Embodiment 2 of the present disclosure.

### DETAILED DESCRIPTION

The detailed descriptions of the present disclosure in the following elaborate on some specific details. Those skilled in the art can fully understand the present disclosure without the description of more details. Well-known methods, procedures, processes, components and circuits are not described in detail to avoid obscuring the essence of the present disclosure.

In addition, those skilled in the art should understand that the accompanying drawings are only for the purpose of illustration and are not necessarily drawn to scale.

At the same time, it should be understood that "circuit" in the following description refers to a conducting loop formed by at least one component or subcircuit through electrical connection or electromagnetic connection. When a component or a circuit is referred to as being "connected" to another component or the component/circuit is referred to as being "connected" between two nodes, it may be directly coupled or connected to another component, or intervening component(s) may be present. The connection between the components may be physical, logical, or a combination thereof. On the contrary, when a component is referred to as being "directly coupled" or "directly connected" to another component, it is meant that there are no intervening component(s) present there between.

Unless otherwise required by the context, the terms "comprise" or "comprising," "include" or "including" and the like used in the whole description herein and throughout the claims should be interpreted to be inclusive rather than exclusive or exhaustive. In other words, the terms "comprise" or "comprising," "include" or "including" and the like used in the whole description herein and throughout the claims should be interpreted to mean "including but not limited to."

In the description of the present disclosure, it should be understood that the terms "first", "second" and the like are only used for the purpose of explanation, and should not be construed as indicating or implying relative importance. Additionally, in the description of the present disclosure, "plural" means two or more unless otherwise specified.

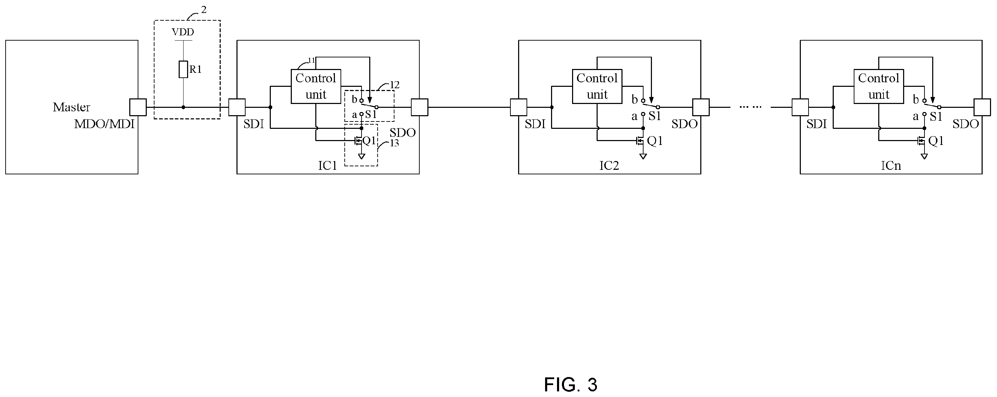

FIG. 3 shows a schematic diagram of a serial communication system of Embodiment 1 of the present disclosure. The serial communication system comprises a master device and at least one communication link, the master device and each of the at least one communication link are connected in series. In this embodiment, the serial communication system comprises a master device and one communication link. The communication link comprises n slave devices IC1 to ICn connected in series, and n is greater than or equal to one. Each slave device comprises at least one input port and at least one output port. In this embodiment, each slave device comprises an input port SDI and an output port SDO. The input port SDI of a first slave device IC1 is connected to an input-output multiplexing port MDO/MDI of the master device. The input port SDI of each of a second slave device IC2 to an nₜₕ slave device ICn is connected to the output port SDO of a slave device immediately prior to it, respectively. Each slave device comprises a control unit 11, and the control unit 11 is configured to forward, or process and then forward, communication packets or commands received by the slave device. The processing of the communication packets comprises modifying relevant data in the communication packets. As an example, the master device and n slave devices in the communication link are connected in series via a daisy chain.

As an example, when the serial communication system operates in a communication mode, the input port SDI of each of a plurality of slave devices is directly connected to its output port SDO, so the master device is coupled to each of a plurality of slave devices to perform serial bus communication, a plurality of slave devices can obtain information or commands sent by the master at the same time. As an example, when the serial communication system operates in a communication mode, the master device and a plurality of slave devices communicate serially to perform chained serial communication, the master device transmits the communication packets to the plurality of slave devices, and the slave device operates in a first mode, at which time the input port SDI of the slave device is connected to its output port SDO through the control unit 11.

When the serial communication system operates in a feedback mode, wherein each of the plurality of slave devices when receiving the instruction serves as the current slave device, the master device transmits an instruction to acquire specific information, the current slave device receives the instruction, the current slave device first operates in the first mode, at which time the instruction received by the input port SDI of the current slave device is transmitted to the output port SDO of the current slave device through the control unit 11, then the instruction is transmitted to the next slave device. Then the current slave device is controlled to operate in a second mode, at which time the input port SDI and the output port SDO of the current slave device are directly connected, that is, the current slave device is in a pass-through state, so that the current slave device can transmit a feedback signal indicating whether the specific information is present in the current slave device to the master device.

Specifically, when the serial communication system operates in the feedback mode, the serial communication system adopts an information feedback method to feed the feedback signal back to the master device. The information feedback method comprises:
transmitting, by the master device, the instruction to acquire the specific information; wherein each of the plurality of slave devices when receiving the instruction serves as the current slave device,
configuring the current slave device in the communication link in the first mode to receive the instruction from the master device or a previous slave device (the one immediately prior to the current slave device), and forwarding the instruction to a next slave device (the one immediately after the current slave device);
connecting the input port SDI and the output port SDO of the current slave device by controlling the current slave device in the second mode to form a first pathway;
determining, by the current slave device, whether the specific information is present in the current slave device to obtain a corresponding determination result; and then based on the determination result, selectively configuring, by the current slave device, a potential of the first pathway of the current slave device to be at a first level, such that the master device receives the feedback signal indicating whether the specific information is present in the communication link.

Specifically, if the determination result shows that the specific information is present in the current slave device, the potential of the first pathway of the current slave device is configured to be at the first level by the current slave device itself.

Further, when the potential of the first pathway of at least one slave device is configured to be at the first level within a preset time threshold, a potential of a linked pathway formed by connecting the first pathways in the communication link in series is configured to be at the first level, such that the master device receives the first level as a first feedback signal. The first feedback signal indicates that the specific information is present in the communication link. When none of the first pathways of the slave devices is configured to be at the first level within the preset time threshold, the potential of the linked pathway formed by connecting the first pathways in the communication link in series is configured to be maintained at a second level, such that the master device receives the second level as a second feedback signal, and the second feedback signal indicates that the specific information is not present in the communication link.

Before one of the slave devices whose first pathway is the first to be configured to be at the first level (i.e., first-configured slave device) determines whether the specific information is present in this slave device, an initial potential of the linked pathway formed by connecting the first pathways in the communication link in series is configured to be at the second level, such that the potentials of the first pathways of the slave devices are configured to be at the second level. Therefore, for the first-configured slave device, the potential of its first pathway is changed from the second level to the first level when being configured, and potentials of first pathways of other slave devices whose first pathways are later configured to be at the first level remain unchanged when the first-configured slave device is being configured.

For example, the first-configured slave device is the iₜₕ slave device, and the iₜₕ slave device first operates in the first mode to receive the instruction from i-1ₜₕ slave device and forwards the instruction to the i+1ₜₕ slave device.

Then the iₜₕ slave device is controlled to operate in the second mode to connect its own input port SDI and output port SDO, so as to form the first pathway of the iₜₕ slave device. At this time, since the linked pathway formed by connecting the first pathways of the first slave device to the iₜₕ slave device in series is configured to be at the second level, the potential of the first pathway of the iₜₕ slave device is configured to be at the second level.

The iₜₕ slave device determines whether the specific information is present in itself to obtain the corresponding determination result, and if the determination result shows that the specific information is present in the iₜₕ slave device, the potential of the first pathway of the iₜₕ slave device is configured to be at the first level, that is, the potential of the first pathway of the iₜₕ slave device changes from the second level to the first level, and the potential of the linked pathway formed by connecting the first pathways of the first slave device to the iₜₕ slave device in series is configured to be at the first level, such that the master device receives the first level as the first feedback signal. As an example, when the master device has received the first level as the first feedback signal, the processes of forwarding the instruction and determining whether the specific information is present in the slave devices continue, that is, the i+1ₜₕ slave device receives the instruction and then transmits the instruction to the i+2ₜₕ slave device, and at the same time, the i+1ₜₕ slave device determines whether the specific information is present in itself, but the determination results from the i+1ₜₕ slave device to the nₜₕ slave device will not influence the feedback signal. As another example, the processes of forwarding the instruction and determining whether the specific information is present in the slave devices stop after the potential of the linked pathway is configured to be at the first level by the iₜₕ slave device (i.e., when the master device has received the first level as the first feedback signal).

As an example, each slave device further comprises a mode selection circuit 12. A first end of the mode selection circuit 12 is connected to the input port SDI of the corresponding slave device, a second end of the mode selection circuit 12 is selectively connected to the output port SDO of the corresponding slave device or a first end of the control unit 11, and a second end of the control unit 11 is connected to the output port SDO of the corresponding slave device. As another example, the first end of the mode selection circuit 12 may be connected to the output port SDO of the corresponding slave device, the second end of the mode selection circuit 12 can be selectively connected to the input port SDI of the corresponding slave device or the first end of the control unit 11, and the second end of the control unit 11 can be connected to the input port SDI of the corresponding slave device. The mode selection circuit 12 is controlled by the control unit 11 to control the corresponding slave device to operate in the first mode or the second mode. When the serial communication system operates in the feedback mode, the master device transmits the instruction to acquire the specific information, the control unit 11 controls the mode selection circuit 12 such that the second end of the mode selection circuit 12 is connected to the first end of the control unit 11 and the current slave device operates in the first mode, at which time the instruction received by the input port SDI of the current slave device is transmitted to the output port SDO of the current slave device through the control unit 11, then the instruction is transmitted to the next slave device. Next, the control unit 11 controls the mode selection circuit 12 such that the second end of the mode selection circuit 12 is connected to the corresponding input/ output ports of the current slave device, and the current slave device operates in the second mode, at which time the input port SDI and the output port SDO of the current slave device are connected, to provide the feedback signal to the master device.

Specifically, for each slave device, the current slave device first operates in the first mode, at which time the instruction received by the input port SDI of the slave device is transmitted to the output port SDO of the slave device through the control unit 11. After receiving and transmitting the instruction by the slave device, the control unit 11 controls the current slave device to operate in the second mode, i.e., the control unit 11 controls the mode selection circuit 12 to connect the input port SDI and the output port SDO of the current slave device to form the first pathway. Then the current slave device determines whether the specific information is present in itself and obtains a corresponding determination result. Then the current slave device selectively configures the potential of its first pathway to be at the first level based on the determination result. When the slave device fails to receive the instruction, or when the current slave device receives the instruction but does not transmit the instruction, the control unit 11 controls the mode selection circuit 12 to connect the input port SDI of the current slave device to the output port SDO of the current slave device through the control unit 11, and the current slave device remains at the first mode. Further, after the instruction is transmitted from the master device, the master device acquires the feedback signal indicating whether the specific information is present in the slave devices through the above information feedback method during a first time, and when the first time is greater than the preset time threshold, i.e., a duration for the master device to receive the feedback signal from the slave devices is greater than the preset time threshold, the slave device is controlled to exit the second mode and operate in the first mode, and the serial communication system exits the feedback mode.

As an example, when the serial communication system operates in the communication mode, the control unit 11 controls the slave device to keep operating in the first mode, at which time the control unit 11 controls the mode selection circuit 12 to connect the input port SDI of the slave device to the output port SDO of the slave device through the control unit 11. As another example, when the serial communication system operates in the communication mode, the control unit 11 controls the slave device to keep operating in the second mode, at which time the control unit 11 controls the mode selection circuit 12 to directly connect the input port SDI of the slave device to the output port SDO of the slave device.

As an example, the mode selection circuit 12 comprises a selection switch S1. A first end of the selection switch S1 is connected to the output port SDO of the corresponding slave device, a second end of the selection switch S1 is selectively connected to the input port SDI of the corresponding slave device or the first end of the control unit 11, and the second end of the control unit 11 is connected to the input port SDI of the corresponding slave device. Specifically, after receiving and transmitting the instruction by the current slave device, the control unit 11 controls the selection switch S1 to switch to Node a, Node a is connected to the input port SDI of the current slave device, such that the input port SDI and the output port SDO of the current slave device are connected directly, and the current slave device operates in the second mode. When the current slave device fails to receive the instruction, or when the current slave device receives the instruction but does not transmit the instruction, the control unit 11 controls the selection switch S1 to remain connected to Node b, Node b is connected to the first end of the control unit 11, such that the input port SDI of the current slave device is connected to the output port SDO of the current slave device through the control unit 11, and the current slave device operates in the first mode. For example, in other embodiments, the first end of the selection switch S1 is connected to the input port SDI of the current slave device, the second end of the selection switch S1 is selectively connected to the output port SDO of the current slave device or the first end of the control unit 11, and the second end of the control unit 11 is connected to the output port SDO of the current slave device.

As an example, the serial communication system further comprises a pull-up circuit 2. The pull-up circuit 2 is connected between a power supply VDD and any node of the master device and the first slave device among the plurality of slave devices. The pull-up circuit 2 is configured to pull up the initial potential of the linked pathway to the high level, which serves as the second level, within the preset time threshold, and the first level is configured to be at the low level. As an example, the serial communication system only comprises one pull-up circuit 2, which is connected between the power supply VDD and any node of the master device and the first slave device. As another example, the pull-up circuit 2 is disposed inside the master device, specifically, the pull-up circuit 2 is connected between the power supply VDD and a node connected to the input-output multiplexing port MDI/MDO of the master device. In another embodiment, the serial communication system comprises a plurality of pull-up circuits 2, and each of the plurality of pull-up circuits 2 is connected between the power supply VDD and a node in the first pathway. As an example, each pull-up circuit 2 may be configured as a first resistor R1, while in other embodiments, each pull-up circuit 2 may be configured as a power switch or a current source.

Further, each of the slave devices comprises a pull-down unit 13. The pull-down unit 13 is connected between a ground potential and any node in the first pathway of the corresponding slave device, and is controlled by the control unit 11, and if a corresponding determination result shows that the specific information is present in the corresponding slave device, the pull-down unit 13 is controlled by control unit 11 to pull down the potential of the first pathway of the corresponding slave device to the first level (i.e., the low level), such that the potential of the linked pathway is pulled down to the low level, and the master device receives the low level as the first feedback signal. The first feedback signal indicates that the specific information is present in the communication link.

As an example, the first level is configured to be at the low level, and the second level is configured to be at the high level.

As an example, the pull-down unit 13 comprises a first power switch Q1. The first power switch Q1 is connected between the input port SDI of the corresponding slave device and the ground potential and is controlled by the control unit 11, and if a corresponding determination result shows that the specific information is present in the corresponding slave device, the first power switch Q1 is turned on to pull down the potential of the first pathway to zero (i.e., low level), otherwise the first power switch Q1 is turned off, and the potential of the first pathway is maintained at the high level. In other embodiments, the first power switch Q1 is connected between the output port SDO of the corresponding slave device and the ground potential. As another example, the pull-down unit 13 comprises a first current source. The first current source is connected between any node in the first pathway of the corresponding slave device and the ground potential, and if a corresponding determination result shows that the specific information is present in the corresponding slave device, the first current source operates to pull down the potential of the first pathway to zero, otherwise, the first current source is disabled and the potential of the first pathway is maintained at the high level. Specifically, as an example, a first power end of the first power switch Q1 is connected to the input port SDI of the corresponding slave device, a second power end of the first power switch Q1 is connected to the ground potential, and a control end of the first power switch is connected to the control unit 11. A common end of the first power switch Q1 and the input port SDI are connected to Node a.

As an example, when the master device needs to acquire the specific information from the slave devices, the input/output multiplexing port MDO/MDI of the master device is configured in an output mode, and the master device transmits the instruction. After the instruction is transmitted by the master device, the input/output multiplexing port MDO/MDI of the master device is configured in an input mode. After the instruction is received and transmitted by the first slave device, the control unit 11 controls the selection switch S1 to switch to the Node a, and the input port SDI and the output port SDO of the first slave device are directly connected to form the first pathway, at which time, the first pathway is configured at the high level, and a linked pathway from the input-output multiplexing port MDO/MDI of the master device to the output port SDO of the first slave device IC1 is also configured at the high level. The control unit 11 determines whether the specific information is present in the first slave device and selectively turns the first power switch Q1 on or off. Specifically, if the control unit 11 of the first slave device determines that the specific information is present in the first slave device, the first power switch Q1 is turned on, and the potential of the first pathway is pulled down to the low level, such that the linked pathway from the input-output multiplexing port MDO/MDI of the master device to the output port SDO of the first slave device IC1 is configured at the low level, and the input-output multiplexing port MDO/MDI of the master device is configured at the low level, i.e., the master device receives the low level as the feedback signal, indicating that the specific information is present in the communication link. The second to nₜₕ slave devices repeat the above processes in sequence. When the potential of the first pathway of at least one slave device is pulled down to the first level (low level) within the preset time threshold, the master device receives the low level as the first feedback signal, and the first feedback signal indicates that the specific information is present in the communication link. When none of the first pathways is pulled down to the first level within the preset time threshold, the potential of the linked pathway formed by connecting the first pathways in the communication link in series is maintained at the high level, and the master device receives the high level as the second feedback signal, the second feedback signal indicates that the specific information is not present in the communication link.

As an example, the master device comprises the input-output multiplexing port MDO/MDI, and is configured to transmit the instruction to acquire the specific information and receives the feedback signal from the plurality of slave devices. As another example, the master device comprises an output port and an input port, the output port is configured to transmit the instruction, and the input port is configured to receive the feedback signal from the slave devices. The input port and the output port of the master device are both connected to the input port of the first slave device, and the output port of the master device is configured to be in a high-resistance state after the master device transmits the instruction.

The specific information is configured as simple information that does not need to be specifically localized to a particular communication link and/or a particular slave device, such as "insufficient supply voltage" or "error reporting".

In the present disclosure, as an example, the specific information comprises information such as there exist errors of the slave devices to be reported. After the master device transmits the instruction to acquire the errors, if the errors are present in the salve device in the communication link within the preset time threshold, the control unit 11 of the current slave device controls the pull-down unit 13 to pull down the potential of the first pathway of the current slave device to the low level as the first level, so the potential of the linked pathway formed by connecting the first pathways of the plurality of slave devices in series is configured to be at the first level, and the master device receives the first level as the first feedback signal which indicates that the errors to be reported are present in the salve device in the communication link. The master device may perform a next operation accordingly, such as stopping communicating with the slave devices in the communication link. Conversely, if none of the first pathways of the plurality of slave devices is configured to be at the first level within the preset time threshold, so the potential of the linked pathway formed by connecting the first pathways of the plurality of slave devices in series is maintained at the second level (i.e., high level), and the master device receives the second level as the second feedback signal which indicates that the errors to be reported are not present in the salve device in the communication link.

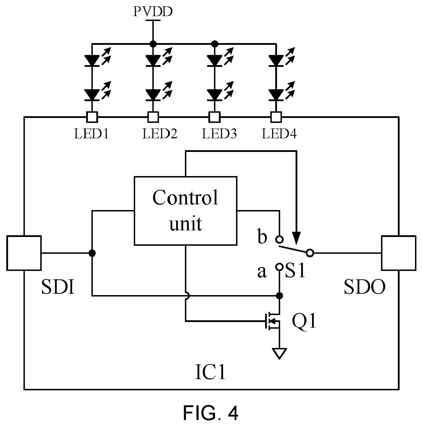

Each of the plurality of slave devices is configured to drive a plurality of LED strings, as an example, the specific information comprises first information indicating that a supply voltage of the plurality of LED strings is insufficient. The supply voltage of the plurality of LED strings increases when the first feedback signal indicating that the specific information is present in the salve device in the communication link is received by the master device. For example, FIG. 4 shows a schematic diagram of one of the plurality of slave devices in the serial communication system of Embodiment 1 of the present disclosure. As shown in FIG. 4, the slave device is configured to drive four LED strings consisting of LED1, LED2, LED3 and LED4. The first information comprises that a cathode voltage of the cathode of one of the plurality of LED strings is less than a first threshold. After the master device transmits the instruction to acquire the first information which indicates that the cathode voltage of the cathode of the LED string is less than the first threshold, if the cathode voltage of at least one of the plurality of LED strings is less than the first threshold within the preset time threshold, the first power switch Q1 turns on, and the potential of the first pathway of the current slave device is pulled down to the low level as the first level, such that the potential of the linked pathway formed by connecting the first pathways of the plurality of slave devices in series is configured to be at the first level, the master device receives the first level as the first feedback signal, the first feedback signal indicates that the cathode voltage of the LED string is less than the first threshold is present in the slave device in the communication link, and the master device obtains the specific information which indicates that the supply voltage of the plurality of LED strings is insufficient and then increases the supply voltage of the plurality of LED strings. Conversely, if cathode voltages of LED strings of all slave devices are greater than the first threshold, and none of the potential of the first pathways of the plurality of slave devices is configured to be at the first level within the preset time threshold, the potential of the linked pathway formed by connecting the first pathways of the plurality of slave devices in series is configured to be at the second level (i.e., high level), the master device receives the second level as the second feedback signal, the second feedback signal indicates that none of the cathode voltages of LED strings of the slave devices in the communication link is less than the first threshold, and the master device does not adjust the supply voltage.

As an example, the output port SDO of the last slave device is not connected to the master device, while as another example, the output port SDO of the last slave device may be connected to the master device and adopts the above information feedback method.

As an example, the serial communication system comprises master device and one communication link which are connected in series. As another example, the serial communication system comprises one master device and N communication links, and the master device and each of N communication links are connected in series and N is an integer greater than one. The number of slave devices in each communication link may be the same or different, and each communication link corresponds to one multiplexing port of the master device, that is, the N communication links correspond to N input-output multiplexing ports of the master device, respectively, and a first slave device among the plurality of slave devices in each communication link is connected to the corresponding input-output multiplexing port of the master device. As yet another example, the serial communication system comprises one master device and N communication links, and the master device and each of N communication links are connected in series and N is greater than one. The number of slave devices in each communication link may be the same or different, and the N communication links correspond to a same input-output multiplexing port of the master device. The N communication links in the above two serial communication systems all feedback the information to the master device in accordance with the above information feedback method. When one of the plurality of slave devices of one communication link determines that the specific information is present in the slave device, the master device receives the first level as the first feedback signal which indicates that the specific information is present in the communication link. When all the slave devices of the communication links determine that the specific information is not present in themselves, the master device receives the second level as the second feedback signal, which indicates that the specific information is not present in the communication link.

As an example, each of the plurality of slave devices in the serial communication system comprises one input port and one output port for single-wire communication, while as another example, each slave device may comprise two input ports and two output ports, and one of the input ports is configured to receive a clock signal and one of the output ports is configured to output the clock signal for other communication such as I²C communication.

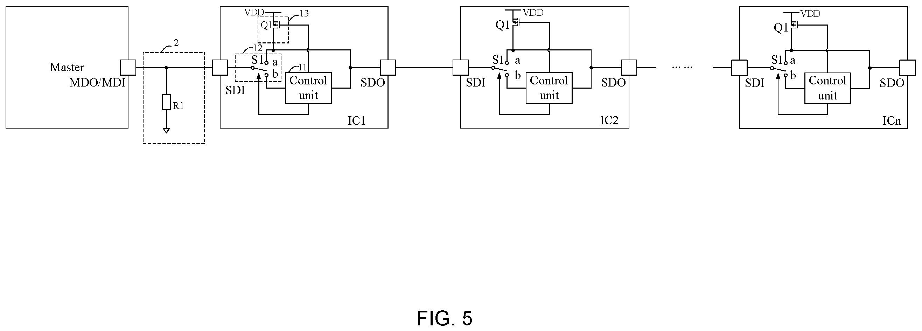

FIG. 5 shows a schematic diagram of a serial communication system of Embodiment 2 of the present disclosure. Embodiment 2 differs from Embodiment 1 in that, in Embodiment 2, the first level is configured to be at the high level, the second level is configured to be at the low level, the pull-up circuit and the pull-down circuit have different positions and structures from Embodiment 1, and the mode selection circuit 12 has a different position.

Specifically, the serial communication system comprises a pull-down circuit 2, and the pull-down circuit 2 is configured to pull down the potential of the linked pathway to the second level within the preset time threshold. As an example, the pull-down circuit 2 is connected between the ground potential and any node of the master device and the input port SDI of the first slave device, while as another example, the pull-down circuit 2 is disposed inside the master device, specifically, the pull-down circuit 2 is connected between the ground potential and the node connected to the input-output multiplexing port MDI/MDO of the master device. In other embodiments, the serial communication system comprises a plurality of pull-down circuits 2, that is, each of the plurality of slave devices corresponds to one of the plurality of pull-down circuits 2, and each of the plurality of pull-down circuits 2 is connected between any node in the first pathway of the corresponding slave device and the ground potential. As an example, the pull-down circuit 2 may be configured as a first resistor R1, while in other embodiments, the pull-down circuit 2 may be configured as a power switch or a current source.

As an example, each of the slave devices comprises a pull-up unit 13, and the pull-up unit 13 is connected between the power supply VDD and any node of the first pathway of the corresponding slave device, and is controlled by the control unit 11. If the corresponding slave device determines that specific information is present in itself, the control unit 11 controls the pull-up unit 13 to pull up the potential of the first pathway of the corresponding slave device to the high level as the first level, such that the potential of the linked pathway is pulled up to the high level, and the master device receives the high level as the first feedback signal which indicates that the specific information is present in at least one slave device in the communication link. As an example, the pull-up unit 13 comprises a first power switch Q1, and the first power switch Q1 is connected between any node in the first pathway of the corresponding slave device and the power supply VDD, and if the corresponding slave device determines that the specific information is present in itself, the corresponding slave device turns on the first power switch to pull up the potential of the first pathway of the corresponding slave device to the high level, otherwise the corresponding slave device turns off the first power switch Q1, and the potential of the first pathway of the corresponding slave device is maintained at the low level. As another example, the pull-up unit comprises a first current source, and the first current source is connected between any node of the first pathway of the corresponding slave device and the power supply VDD, and if the corresponding slave device determines that the specific information is present in itself, the corresponding slave device controls the first current source to operate to pull up the potential of the first pathway of the corresponding slave device to the high level, otherwise, the first current source is disabled and the potential of the first pathway of the corresponding slave device is maintained at the low level. When none of first pathways of the plurality of slave devices is configured to be at the high level within the preset time threshold, the master device receives the low level as the second feedback signal, which indicates that the specific information is not present in the slave device in the communication link.

The mode selection circuit 12 comprises a selection switch S1, and as an example, a first end of the selection switch S1 is connected to the input port SDI of the corresponding slave device, a second end of the selection switch S1 is selectively connected to the output port SDO of the corresponding slave device or the first end of the control unit 11. The second end of the control unit 11 is connected to the output port SDO of the corresponding slave device.

The remaining sections are similar to Embodiment 1 and will not be repeated.

It should be noted that one of the high level and the low level is configured as the first level and the other one of the high level and the low level is configured as the second level in embodiments 1 and 2, while in other embodiments, the first level and the second level may also be configured to be a specific number, for example, 5V and 3V, respectively.

Although the above description separately describes and elaborates the embodiments, a person having ordinary skill in the art may substitute and integrate the common technical features among embodiments, and the content which one embodiment does not clearly record may refer to another embodiment with the content not recorded by the one embodiment.

## Claims

1. An information feedback method applied to a serial communication system, wherein the serial communication system comprises a master device and at least one communication link, the master and each communication link are connected in series; wherein each communication link comprises a plurality of slave devices (IC1, ..., ICn) connected in series, and each of the plurality of slave devices (IC1, ..., ICn) comprises an input port (SDI) and an output port (SDO); wherein the information feedback method comprises:
transmitting, by the master device, an instruction to acquire specific information; wherein each of the plurality of slave devices (IC1, ..., ICn) when receiving the instruction serves as a current slave device,
configuring the current slave device in the communication link in a first mode to receive the instruction from the master device or a previous slave device, and forwarding the instruction to a subsequent slave device;
connecting the input port (SDI) and the output port (SDO) of the current slave device by controlling the current slave device in a second mode to form a first pathway;
wherein each of the plurality of slave devices (IC1, ..., ICn) further comprises a control unit (11); wherein when one of the plurality of slave devices (IC1, ..., ICn) is in the first mode, the input port (SDI) and the output port (SDO) of the slave device (IC1, ..., ICn) are connected through the control unit (11), and when one of the plurality of slave devices (IC1, ..., ICn) is in the second mode, the input port (SDI) and the output port (SDO) of the slave device (IC1, ..., ICn) are directly connected;
determining, by the current slave device, whether the specific information is present in the current slave device to obtain a corresponding determination result; and based on the determination result, selectively configuring, in the second mode by the current slave device, a potential of the first pathway of the current slave device to be at a first level, such that the master device receives a feedback signal indicating whether the specific information is present in the slave device in the communication link; wherein the first level is configured to be at a low level.

2. The information feedback method according to claim 1, wherein if the determination result shows that the specific information is present in the current slave device, configuring the potential of the first pathway of the current slave device to be at the first level.

3. The information feedback method according to claim 1, wherein when a potential of a first pathway of one of the plurality of slave devices (IC1, ..., ICn)is configured to be at the first level within a preset time threshold, configuring a potential of a linked pathway formed by connecting a plurality of first pathways of the communication link in series to be at the first level, such that the master device receives the first level as a first feedback signal, wherein the first feedback signal indicates that the specific information is present in the slave device in the communication link.

4. The information feedback method according to claim 1, wherein when none of first pathways of the plurality of slave devices (IC1, ..., ICn) is configured to be at the first level within a preset time threshold, configuring a potential of a linked pathway formed by connecting the first pathways of the plurality of slave devices (IC1, ..., ICn) in series to be maintained at a second level, such that the master device receives the second level as a second feedback signal, wherein the second feedback signal indicates that the specific information is not present in the slave device in the communication link.

5. The information feedback method according to claim 1, wherein before determining, by one of the plurality of slave devices (IC1, ..., ICn) whose first pathway is the first to be configured to be at the first level, whether the specific information is present in the slave device, configuring an initial potential of a linked pathway formed by connecting a plurality of first pathways of the communication link in series to be at a second level, such that the potential of the first pathway of the slave device is configured to be at the second level.

6. The information feedback method according to claim 1, wherein when the serial communication system operates in a communication mode, the slave device continuously operates in the first mode or continuously operates in the second mode.

7. The information feedback method according to claim 1, wherein when the serial communication system operates in a feedback mode, the current slave device first operates in the first mode to transmit the instruction to the subsequent slave device, and then the current slave device is controlled to operate in the second mode to feed the feedback signal back to the master device.

8. The information feedback method according to claim 1, wherein the serial communication system further comprises a pull-up circuit (2); wherein the pull-up circuit (2) is configured to set an initial potential of a linked pathway formed by connecting a plurality of first pathways of the communication link in series to be at a second level within a preset time threshold; wherein the second level is configured to be at a high level.

9. The information feedback method according to claim 8, wherein each of the plurality of slave devices (IC1, ..., ICn) further comprises a pull-down unit (13); wherein the pull-down unit (13) is connected between any node in the first pathway of the corresponding slave device and a ground potential, and if the determination result shows that the specific information is present in the corresponding slave device, the pull-down unit (13) is controlled to pull down the potential of the first pathway of the corresponding slave device to the first level, such that a potential of the linked pathway is pulled down from the high level to the low level, and the master device receives the low level as a first feedback signal, wherein the first feedback signal indicates that the specific information is present in the slave device in the communication link.

10. The information feedback method according to claim 9, wherein the pull-down unit (13) comprises a first power switch (Q1); wherein the first power switch (Q1) is connected between any node in the first pathway of the corresponding slave device and the ground potential, and if the determination result shows that the specific information is present in the corresponding slave device, the first power switch (Q1) is turned on to pull down the potential of the first pathway to the low level; or wherein the pull-down unit (13) comprises a first current source; wherein the first current source is connected between any node in the first pathway of the corresponding slave device and the ground potential, and if the determination result shows that the specific information is present in the corresponding slave device, the first current source operates to pull down the potential of the first pathway to the low level.

11. The information feedback method according to claim 1, wherein the serial communication system further comprises a pull-down circuit; wherein the pull-down circuit is configured to set an initial potential of a linked pathway formed by connecting a plurality of first pathways of the communication link in series to be at a second level within a preset time threshold; wherein the second level is configured to be at a low level, and the first level is configured to be at a high level.

12. The information feedback method according to claim 11, wherein each of the plurality of slave devices (IC1, ..., ICn) further comprises a pull-up unit; wherein the pull-up unit is connected between any node in the first pathway of the corresponding slave device and a power supply (VDD), and if the determination result shows that the specific information is present in the corresponding slave device, the pull-up unit is controlled to pull up the potential of the first pathway of the slave device to the first level, such that a potential of the linked pathway is pulled up from the low level to the high level, and the master device receives the high level as a first feedback signal, wherein the first feedback signal indicates that the specific information is present in the slave device in the communication link.

13. The information feedback method according to claim 12, wherein the pull-up unit comprises a first power switch; wherein the first power switch is connected between any node in the first pathway of the corresponding slave device and the power supply (VDD), and if the determination result shows that the specific information is present in the corresponding slave device, the first power switch is turned on to pull up the potential of the first pathway to the high level; or wherein the pull-up unit comprises a first current source; wherein the first current source is connected between any node in the first pathway of the corresponding slave device and the power supply (VDD), and if the determination result shows that the specific information is present in the corresponding slave device, the first current source operates to pull up the potential of the first pathway to the high level.

14. The information feedback method according to claim 1, wherein each of the plurality of slave devices (IC1, ..., ICn) further comprises a mode selection circuit (12) and a control unit (11); wherein
a first end of the mode selection circuit (12) is connected to the input port (SDI) of the corresponding slave device, a second end of the mode selection circuit (12) is selectively connected to the output port (SDO) of the corresponding slave device or a first end of the control unit (11), and a second end of the control unit (11) is connected to the output port (SDO) of the corresponding slave device;
or
a first end of the mode selection circuit (12) is connected to the output port (SDO) of the corresponding slave device, a second end of the mode selection circuit (12) is selectively connected to the input port (SDI) of the corresponding slave device or a first end of the control unit (11), and a second end of the control unit (11) is connected to the input port (SDI) of the corresponding slave device;
wherein the mode selection circuit (12) is controlled by the control unit (11) to control the slave device to operate in the first mode or the second mode.

15. The information feedback method according to claim 1, wherein the master device transmits the instruction to acquire the specific information and then receives the feedback signal from the slave devices, and when a duration for the master device to receive the feedback signal from the slave devices is greater than a preset time threshold, the slave device is controlled to exit the second mode and operate in the first mode.

16. The information feedback method according to claim 1, wherein the master device comprises an input-output multiplexing port, and the input-output multiplexing port is configured to transmit the instruction and receive the feedback signal from the slave device; or wherein the master device comprises an output port (SDO) and an input port (SDI); wherein the output port (SDO) is configured to transmit the instruction, and the input port (SDI) is configured to receive the feedback signal from the slave device, wherein the input port (SDI) and the output port (SDO) of the master device are both connected to an input port (SDI) of a first slave device among the plurality of slave devices (IC1, ..., ICn).

17. The information feedback method according to claim 1, wherein the specific information comprises errors to be reported by the slave device; or wherein each of the plurality of slave devices (IC1, ..., ICn) is configured to drive a plurality of LED strings, and the specific information comprises first information indicating that a supply voltage of the plurality of LED strings is insufficient.

18. The information feedback method according to claim 1, wherein an output port (SDO) of a last slave device among the plurality of slave devices (IC1, ..., ICn) is not connected to the master device or an output port (SDO) of a last slave device among the plurality of slave devices (IC1, ..., ICn) is connected to the master device.

19. A serial communication system, comprising:
a master device and at least one communication link, the master device and each communication link are connected in series; wherein each communication link comprises a plurality of slave devices (IC1, ..., ICn) connected in series, and each of the plurality of slave devices (IC1, ..., ICn) comprises an input port (SDI) and an output port (SDO);
wherein the serial communication system is configured to apply all method steps of the information feedback method according to any one of claims 1-18, multiplexing the serial communication system, to feed a feedback signal back to the master device, wherein the feedback signal indicates whether a specific information is present in the plurality of slave devices (IC1, ..., ICn) in the communication link.

## Patentansprüche

1. Informationsrückmeldungsverfahren, das bei einem seriellen Kommunikationssystem angewendet wird, wobei das serielle Kommunikationssystem eine Master-Vorrichtung und mindestens eine Kommunikationsverbindung aufweist, wobei der Master und jede Kommunikationsverbindung in Reihe geschaltet sind; wobei jede Kommunikationsverbindung eine Mehrzahl von in Reihe geschalteten Slave-Vorrichtungen (IC1, ..., ICn) aufweist und jede aus der Mehrzahl von Slave-Vorrichtungen (IC1, ..., ICn) einen Eingangsanschluss (SDI) und einen Ausgangsanschluss (SDO) aufweist; wobei das Informationsrückmeldungsverfahren aufweist:
Senden, durch die Mastervorrichtung, einer Anweisung zum Erlangen spezifischer Informationen; wobei jede aus der Mehrzahl von Slave-Vorrichtungen (IC1, ..., ICn) beim Empfangen der Anweisung als eine aktuelle Slave-Vorrichtung dient,
Konfigurieren der aktuellen Slave-Vorrichtung in der Kommunikationsverbindung in einem ersten Modus, um die Anweisung von der Master-Vorrichtung oder einer vorherigen Slave-Vorrichtung zu empfangen, und Weiterleiten der Anweisung an eine nachfolgende Slave-Vorrichtung;
Verbinden des Eingangsanschlusses (SDI) und des Ausgangsanschlusses (SDO) der aktuellen Slave-Vorrichtung durch Steuern der aktuellen Slave-Vorrichtung in einem zweiten Modus, um einen ersten Pfad zu bilden;
wobei jede aus der Mehrzahl von Slave-Vorrichtungen (IC1, ..., ICn) ferner eine Steuereinheit (11) aufweist; wobei, wenn eine aus der Mehrzahl von Slave-Vorrichtungen (IC1, ..., ICn) im ersten Modus ist, der Eingangsanschluss (SDI) und der Ausgangsanschluss (SDO) der Slave-Vorrichtung (IC1, ..., ICn) über die Steuereinheit (11) verbunden sind, und wenn eine aus der Mehrzahl von Slave-Vorrichtungen (IC1, ..., ICn) im zweiten Modus ist, der Eingangsanschluss (SDI) und der Ausgangsanschluss (SDO) der Slave-Vorrichtung (IC1, ..., ICn) direkt verbunden sind;
Ermitteln, durch die aktuelle Slave-Vorrichtung, ob die spezifischen Informationen in der aktuellen Slave-Vorrichtung vorhanden sind, um ein korrespondierendes Ermittlungsergebnis zu erhalten; und basierend auf dem Ermittlungsergebnis selektives Konfigurieren, im zweiten Modus durch die aktuelle Slave-Vorrichtung, eines Potentials des ersten Pfades der aktuellen Slave-Vorrichtung, um auf einem ersten Pegel zu sein, so dass die Master-Vorrichtung ein Rückmeldesignal empfängt, das angibt, ob die spezifischen Informationen in der Slave-Vorrichtung in der Kommunikationsverbindung vorhanden sind; wobei der erste Pegel konfiguriert ist, um auf einem niedrigen Pegel zu sein.

2. Informationsrückmeldungsverfahren gemäß Anspruch 1, wobei, wenn das Ermittlungsergebnis zeigt, dass die spezifischen Informationen in der aktuellen Slave-Vorrichtung vorhanden sind, das Potential des ersten Pfades der aktuellen Slave-Vorrichtung konfiguriert wird, um auf dem ersten Pegel zu sein.

3. Informationsrückmeldungsverfahren gemäß Anspruch 1, wobei, wenn ein Potential eines ersten Pfades von einer aus der Mehrzahl von Slave-Vorrichtungen (IC1, ..., ICn) konfiguriert ist, um innerhalb einer voreingestellten Zeitschwelle auf dem ersten Pegel zu sein, ein Potential eines verbundenen Pfades, der durch Verbinden einer Mehrzahl von ersten Pfaden der Kommunikationsverbindung in Reihe gebildet wird, konfiguriert wird, um auf dem ersten Pegel zu sein, so dass die Master-Vorrichtung den ersten Pegel als ein erstes Rückmeldesignal empfängt, wobei das erste Rückmeldesignal anzeigt, dass die spezifischen Informationen in der Slave-Vorrichtung in der Kommunikationsverbindung vorhanden sind.

4. Informationsrückmeldungsverfahren gemäß Anspruch 1, wobei, wenn keiner von ersten Pfaden der Mehrzahl von Slave-Vorrichtungen (IC1, ..., ICn) konfiguriert ist, um innerhalb einer voreingestellten Zeitschwelle auf dem ersten Pegel zu sein, ein Potential eines verbundenen Pfades, der durch Verbinden der ersten Pfade der Mehrzahl von Slave-Vorrichtungen (IC1, ..., ICn) in Reihe gebildet wird, konfiguriert wird, um einem zweiten Pegel gehalten zu werden, so dass die Master-Vorrichtung den zweiten Pegel als ein zweites Rückmeldesignal empfängt, wobei das zweite Rückmeldesignal anzeigt, dass die spezifischen Informationen nicht in der Slave-Vorrichtung in der Kommunikationsverbindung vorhanden sind.

5. Informationsrückmeldungsverfahren gemäß Anspruch 1, wobei vor dem Ermitteln, durch eine aus der Mehrzahl von Slave-Vorrichtungen (IC1, ..., ICn), deren erster Pfad als erster konfiguriert wird, um auf dem ersten Pegel zu sein, ob die spezifischen Informationen in der Slave-Vorrichtung vorhanden sind, ein Anfangspotential eines verbundenen Pfades, der durch Verbinden einer Mehrzahl von ersten Pfaden der Kommunikationsverbindung in Reihe gebildet wird, konfiguriert wird, um auf einem zweiten Pegel zu sein, so dass das Potential des ersten Pfades der Slave-Vorrichtung konfiguriert wird, um auf dem zweiten Pegel zu sein.

6. Informationsrückmeldungsverfahren gemäß Anspruch 1, wobei, wenn das serielle Kommunikationssystem in einem Kommunikationsmodus arbeitet, die Slave-Vorrichtung kontinuierlich im ersten Modus arbeitet oder kontinuierlich im zweiten Modus arbeitet.

7. Informationsrückmeldungsverfahren gemäß Anspruch 1, wobei, wenn das serielle Kommunikationssystem in einem Rückmeldungsmodus arbeitet, die aktuelle Slave-Vorrichtung zunächst im ersten Modus arbeitet, um die Anweisung an die nachfolgende Slave-Vorrichtung zu übermitteln, und dann die aktuelle Slave-Vorrichtung gesteuert wird, um im zweiten Modus zu arbeiten, um das Rückmeldesignal an die Master-Vorrichtung zurückzuführen.

8. Informationsrückmeldungsverfahren gemäß Anspruch 1, wobei das serielle Kommunikationssystem ferner eine Pull-up-Schaltung (2) aufweist; wobei die Pull-up-Schaltung (2) konfiguriert ist, um ein Anfangspotential eines verbundenen Pfades, der durch Verbinden einer Mehrzahl von ersten Pfaden der Kommunikationsverbindung in Reihe gebildet wird, einzustellen, um innerhalb einer voreingestellten Zeitschwelle auf einem zweiten Pegel zu sein; wobei der zweite Pegel konfiguriert ist, um auf einem hohen Pegel zu sein.

9. Informationsrückmeldungsverfahren gemäß Anspruch 8, wobei jede aus der Mehrzahl von Slave-Vorrichtungen (IC1, ..., ICn) ferner eine Pull-down-Einheit (13) aufweist; wobei die Pull-down-Einheit (13) zwischen irgendeinem Knoten im ersten Pfad der korrespondierenden Slave-Vorrichtung und einem Massepotential angeschlossen ist, und wenn das Ermittlungsergebnis zeigt, dass die spezifischen Informationen in der korrespondierenden Slave-Vorrichtung vorhanden sind, die Pull-down-Einheit (13) gesteuert wird, um das Potential des ersten Pfades der korrespondierenden Slave-Vorrichtung auf den ersten Pegel herunterzuziehen, so dass ein Potential des verbundenen Pfades vom hohen Pegel auf den niedrigen Pegel heruntergezogen wird und die Master-Vorrichtung den niedrigen Pegel als erstes Rückmeldesignal empfängt, wobei das erste Rückmeldesignal anzeigt, dass die spezifischen Informationen in der Slave-Vorrichtung in der Kommunikationsverbindung vorhanden sind.

10. Informationsrückmeldungsverfahren gemäß Anspruch 9, wobei die Pull-down-Einheit (13) einen ersten Leistungsschalter (Q1) aufweist; wobei der erste Leistungsschalter (Q1) zwischen irgendeinem Knoten im ersten Pfad der korrespondierenden Slave-Vorrichtung und dem Massepotential angeschlossen ist, und wenn das Ermittlungsergebnis zeigt, dass die spezifischen Informationen in der korrespondierenden Slave-Vorrichtung vorhanden sind, der erste Leistungsschalter (Q1) eingeschaltet wird, um das Potential des ersten Pfades auf den niedrigen Pegel herunterzuziehen; oder wobei die Pull-down-Einheit (13) eine erste Stromquelle aufweist; wobei die erste Stromquelle zwischen irgendeinem Knoten im ersten Pfad der korrespondierenden Slave-Vorrichtung und dem Massepotential angeschlossen ist, und wenn das Ermittlungsergebnis zeigt, dass die spezifischen Informationen in der korrespondierenden Slave-Vorrichtung vorhanden sind, die erste Stromquelle arbeitet, um das Potential des ersten Pfades auf den niedrigen Pegel herunterzuziehen.

11. Informationsrückmeldungsverfahren gemäß Anspruch 1, wobei das serielle Kommunikationssystem ferner eine Pull-down-Schaltung aufweist; wobei die Pull-down-Schaltung konfiguriert ist, um ein Anfangspotential eines verbundenen Pfades, der durch Verbinden einer Mehrzahl von ersten Pfaden der Kommunikationsverbindung in Reihe gebildet wird, einzustellen, um innerhalb einer voreingestellten Zeitschwelle auf einem zweiten Pegel zu sein; wobei der zweite Pegel konfiguriert ist, um auf einem niedrigen Pegel zu sein, und der erste Pegel konfiguriert ist, um auf einem hohen Pegel zu sein.

12. Informationsrückmeldungsverfahren gemäß Anspruch 11, wobei jede aus der Mehrzahl von Slave-Vorrichtungen (IC1, ..., ICn) ferner eine Pull-up-Einheit aufweist; wobei die Pull-up-Einheit zwischen irgendeinem Knoten im ersten Pfad der korrespondierenden Slave-Vorrichtung und einer Stromversorgung (VDD) angeschlossen ist, und wenn das Ermittlungsergebnis zeigt, dass die spezifischen Informationen in der korrespondierenden Slave-Vorrichtung vorhanden sind, die Pull-up-Einheit gesteuert wird, um das Potential des ersten Pfades der Slave-Vorrichtung auf den ersten Pegel hochzuziehen, so dass ein Potential des verbundenen Pfades vom niedrigen Pegel auf den hohen Pegel hochgezogen wird, und die Master-Vorrichtung den hohen Pegel als erstes Rückmeldesignal empfängt, wobei das erste Rückmeldesignal anzeigt, dass die spezifischen Informationen in der Slave-Vorrichtung in der Kommunikationsverbindung vorhanden sind.

13. Informationsrückmeldungsverfahren gemäß Anspruch 12, wobei die Pull-up-Einheit einen ersten Leistungsschalter aufweist; wobei der erste Leistungsschalter zwischen irgendeinem Knoten im ersten Pfad der korrespondierenden Slave-Vorrichtung und der Stromversorgung (VDD) angeschlossen ist, und wenn das Ermittlungsergebnis zeigt, dass die spezifischen Informationen in der korrespondierenden Slave-Vorrichtung vorhanden sind, der erste Leistungsschalter eingeschaltet wird, um das Potential des ersten Pfads auf den hohen Pegel hochzuziehen; oder wobei die Pull-up-Einheit eine erste Stromquelle aufweist; wobei die erste Stromquelle zwischen irgendeinem Knoten im ersten Pfad der korrespondierenden Slave-Vorrichtung und der Stromversorgung (VDD) angeschlossen ist, und wenn das Ermittlungsergebnis zeigt, dass die spezifischen Informationen in der korrespondierenden Slave-Vorrichtung vorhanden sind, die erste Stromquelle arbeitet, um das Potential des ersten Pfades auf den hohen Pegel hochzuziehen.

14. Informationsrückmeldungsverfahren gemäß Anspruch 1, wobei jede aus der Mehrzahl von Slave-Vorrichtungen (IC1, ..., ICn) ferner eine Modusauswahlschaltung (12) und eine Steuereinheit (11) aufweist; wobei
ein erstes Ende der Modusauswahlschaltung (12) mit dem Eingangsanschluss (SDI) der korrespondierenden Slave-Vorrichtung verbunden ist, ein zweites Ende der Modusauswahlschaltung (12) selektiv mit dem Ausgangsanschluss (SDO) der korrespondierenden Slave-Vorrichtung oder einem ersten Ende der Steuereinheit (11) verbunden ist, und ein zweites Ende der Steuereinheit (11) mit dem Ausgangsanschluss (SDO) der korrespondierenden Slave-Vorrichtung verbunden ist;
oder
ein erstes Ende der Modusauswahlschaltung (12) mit dem Ausgangsanschluss (SDO) der korrespondierenden Slave-Vorrichtung verbunden ist, ein zweites Ende der Modusauswahlschaltung (12) selektiv mit dem Eingangsanschluss (SDI) der korrespondierenden Slave-Vorrichtung oder mit einem ersten Ende der Steuereinheit (11) verbunden ist, und ein zweites Ende der Steuereinheit (11) mit dem Eingangsanschluss (SDI) der korrespondierenden Slave-Vorrichtung verbunden ist;
wobei die Modusauswahlschaltung (12) von der Steuereinheit (11) gesteuert wird, um die Slave-Vorrichtung zu steuern, um im ersten Modus oder im zweiten Modus zu arbeiten.

15. Informationsrückmeldungsverfahren gemäß Anspruch 1, wobei die Master-Vorrichtung die Anweisung zum Erlangen der spezifischen Informationen sendet und dann das Rückmeldesignal von den Slave-Vorrichtungen empfängt, und wenn eine Dauer, in der die Master-Vorrichtung das Rückmeldesignal von den Slave-Vorrichtungen empfängt, größer als eine voreingestellte Zeitschwelle ist, die Slave-Vorrichtung gesteuert wird, um den zweiten Modus zu verlassen und im ersten Modus zu arbeiten.

16. Informationsrückmeldungsverfahren gemäß Anspruch 1, wobei die Master-Vorrichtung einen Eingangs-/Ausgangs-Multiplex-Anschluss aufweist und der Eingangs-/Ausgangs-Multiplex-Anschluss konfiguriert ist, um die Anweisung zu senden und das Rückmeldesignal von der Slave-Vorrichtung zu empfangen; oder wobei die Master-Vorrichtung einen Ausgangsanschluss (SDO) und einen Eingangsanschluss (SDI) aufweist; wobei der Ausgangsanschluss (SDO) konfiguriert ist, um die Anweisung zu übermitteln, und der Eingangsanschluss (SDI) konfiguriert ist, um das Rückmeldesignal von der Slave-Vorrichtung zu empfangen, wobei der Eingangsanschluss (SDI) und der Ausgangsanschluss (SDO) der Master-Vorrichtung beide mit einem Eingangsanschluss (SDI) einer ersten Slave-Vorrichtung unter der Mehrzahl von Slave-Vorrichtungen (IC1, ..., ICn) verbunden sind.

17. Informationsrückmeldungsverfahren gemäß Anspruch 1, wobei die spezifischen Informationen Fehler aufweisen, die von der Slave-Vorrichtung zu melden sind; oder wobei jede aus der Mehrzahl von Slave-Vorrichtungen (IC1, ..., ICn) konfiguriert ist, um eine Mehrzahl von LED-Ketten anzusteuern, und die spezifischen Informationen erste Informationen aufweisen, die anzeigen, dass eine Versorgungsspannung der Mehrzahl von LED-Ketten unzureichend ist.

18. Informationsrückmeldungsverfahren gemäß Anspruch 1, wobei ein Ausgangsanschluss (SDO) einer letzten Slave-Vorrichtung unter der Mehrzahl von Slave-Vorrichtungen (IC1, ..., ICn) nicht mit der Master-Vorrichtung verbunden ist oder ein Ausgangsanschluss (SDO) einer letzten Slave-Vorrichtung unter der Mehrzahl von Slave-Vorrichtungen (IC1, ..., ICn) mit der Master-Vorrichtung verbunden ist.

19. Serielles Kommunikationssystem, aufweisend:
eine Master-Vorrichtung und mindestens eine Kommunikationsverbindung, wobei die Master-Vorrichtung und jede Kommunikationsverbindung in Reihe geschaltet sind; wobei jede Kommunikationsverbindung eine Mehrzahl von in Reihe geschalteten Slave-Vorrichtungen (IC1, ..., ICn) aufweist und jede aus der Mehrzahl von Slave-Vorrichtungen (IC1, ..., ICn) einen Eingangsanschluss (SDI) und einen Ausgangsanschluss (SDO) aufweist;
wobei das serielle Kommunikationssystem konfiguriert ist, um alle Verfahrensschritte des Informationsrückmeldungsverfahrens gemäß irgendeinem der Ansprüche 1 bis 18 anzuwenden, wobei das serielle Kommunikationssystem gemultiplext wird, um ein Rückmeldesignal an die Master-Vorrichtung zurückzusenden, wobei das Rückmeldesignal angibt, ob eine spezifische Information in der Mehrzahl von Slave-Vorrichtungen (IC1, ..., ICn) in der Kommunikationsverbindung vorhanden ist.

## Revendications

1. Procédé de rétroaction d'informations appliqué à un système de communication série, dans lequel le système de communication série comprend un dispositif maître et au moins une liaison de communication, le maître et chaque liaison de communication étant connectés en série ; dans lequel chaque liaison de communication comprend une pluralité de dispositifs esclaves (IC1, ..., ICn) connectés en série, et chacun de la pluralité de dispositifs esclaves (IC1, ..., ICn) comprend un port d'entrée (SDI) et un port de sortie (SDO) ; dans lequel le procédé de rétroaction d'informations comprend :
la transmission, par le dispositif maître, d'une instruction pour acquérir des informations spécifiques ; dans lequel chacun de la pluralité de dispositifs esclaves (IC1, ..., ICn) lorsqu'il reçoit l'instruction sert de dispositif esclave actuel,
la configuration du dispositif esclave actuel dans la liaison de communication dans un premier mode pour recevoir l'instruction du dispositif maître ou d'un dispositif esclave précédent, et la transmission de l'instruction à un dispositif esclave suivant ;
la connexion du port d'entrée (SDI) et du port de sortie (SDO) du dispositif esclave actuel en contrôlant le dispositif esclave actuel dans un deuxième mode pour former un premier chemin ;
dans lequel chacun de la pluralité de dispositifs esclaves (IC1, ..., ICn) comprend en outre une unité de commande (11) ; dans lequel, lorsque l'un de la pluralité de dispositifs esclaves (IC1, ..., ICn) est dans le premier mode, le port d'entrée (SDI) et le port de sortie (SDO) du dispositif esclave (IC1, ..., ICn) sont connectés via l'unité de commande (11), et lorsque l'un de la pluralité de dispositifs esclaves (IC1, ..., ICn) est dans le deuxième mode, le port d'entrée (SDI) et le port de sortie (SDO) du dispositif esclave (IC1, ..., ICn) sont directement connectés ;
la détermination, par le dispositif esclave actuel, du fait de savoir si les informations spécifiques sont présentes dans le dispositif esclave actuel afin d'obtenir un résultat de détermination correspondant ; et sur la base du résultat de détermination, la configuration sélective, dans le deuxième mode par le dispositif esclave actuel, d'un potentiel du premier chemin du dispositif esclave actuel pour qu'il soit à un premier niveau, de telle sorte que le dispositif maître reçoive un signal de rétroaction indiquant si les informations spécifiques sont présentes dans le dispositif esclave dans la liaison de communication ; dans lequel le premier niveau est configuré pour être à un niveau bas.

2. Procédé de rétroaction d'informations selon la revendication 1, dans lequel, si le résultat de détermination montre que les informations spécifiques sont présentes dans le dispositif esclave actuel, le potentiel du premier chemin du dispositif esclave actuel est configuré pour être au premier niveau.

3. Procédé de rétroaction d'informations selon la revendication 1, dans lequel, lorsqu'un potentiel d'un premier chemin de l'un de la pluralité de dispositifs esclaves (IC1, ..., ICn) est configuré pour être au premier niveau à l'intérieur d'un seuil de temps prédéfini, on configure un potentiel d'un chemin lié formé en connectant en série une pluralité de premiers chemins de la liaison de communication pour être au premier niveau, de telle sorte que le dispositif maître reçoive le premier niveau comme premier signal de rétroaction, dans lequel le premier signal de rétroaction indique que les informations spécifiques sont présentes dans le dispositif esclave dans la liaison de communication.

4. Procédé de rétroaction d'informations selon la revendication 1, dans lequel, lorsqu'aucun parmi des premiers chemins de la pluralité de dispositifs esclaves (IC1, ..., ICn) n'est configuré pour être au premier niveau dans un seuil de temps prédéfini, on configure un potentiel d'un chemin lié formé en connectant les premiers chemins de la pluralité de dispositifs esclaves (IC1, ..., ICn) en série pour être maintenu à un deuxième niveau, de telle sorte que le dispositif maître reçoive le deuxième niveau comme deuxième signal de rétroaction, dans lequel le deuxième signal de rétroaction indique que les informations spécifiques ne sont pas présentes dans le dispositif esclave dans la liaison de communication.

5. Procédé de rétroaction d'informations selon la revendication 1, dans lequel, avant de déterminer, par l'un de la pluralité de dispositifs esclaves (IC1, ..., ICn) dont le premier chemin est le premier à être configuré pour être au premier niveau, si les informations spécifiques sont présentes dans le dispositif esclave, on configure un potentiel initial d'un chemin lié formé en connectant en série une pluralité de premiers chemins de la liaison de communication pour être à un deuxième niveau, de telle sorte que le potentiel du premier chemin du dispositif esclave soit configuré pour être au deuxième niveau.

6. Procédé de rétroaction d'informations selon la revendication 1, dans lequel, lorsque le système de communication série fonctionne en un mode de communication, le dispositif esclave fonctionne en continu dans le premier mode ou fonctionne en continu dans le deuxième mode.

7. Procédé de rétroaction d'informations selon la revendication 1, dans lequel, lorsque le système de communication série fonctionne dans un mode de rétroaction, le dispositif esclave actuel fonctionne d'abord dans le premier mode pour transmettre l'instruction au dispositif esclave suivant, puis le dispositif esclave actuel est commandé pour fonctionner dans le deuxième mode afin de renvoyer le signal de rétroaction au dispositif maître.

8. Procédé de rétroaction d'informations selon la revendication 1, dans lequel le système de communication série comprend en outre un circuit de tirage vers le haut (2) ; dans lequel le circuit de tirage vers le haut (2) est configuré pour régler un potentiel initial d'un chemin lié formé en connectant en série une pluralité de premiers chemins de la liaison de communication à un deuxième niveau dans un seuil de temps prédéfini ; dans lequel le deuxième niveau est configuré pour être à un niveau élevé.

9. Procédé de rétroaction d'informations selon la revendication 8, dans lequel chacun de la pluralité de dispositifs esclaves (IC1, ..., ICn) comprend en outre une unité de tirage vers le bas (13) ; dans lequel l'unité de tirage vers le bas (13) est connectée entre n'importe quel nœud dans le premier chemin du dispositif esclave correspondant et un potentiel de masse, et si le résultat de détermination montre que les informations spécifiques sont présentes dans le dispositif esclave correspondant, l'unité de tirage vers le bas (13) est commandée pour tirer vers le bas le potentiel du premier chemin du dispositif esclave correspondant au premier niveau, de telle sorte qu'un potentiel du chemin lié soit tiré vers le bas du niveau haut au niveau bas, et le dispositif maître reçoit le niveau bas comme premier signal de rétroaction, dans lequel le premier signal de rétroaction indique que les informations spécifiques sont présentes dans le dispositif esclave dans la liaison de communication.

10. Procédé de rétroaction d'informations selon la revendication 9, dans lequel l'unité de tirage vers le bas (13) comprend un premier commutateur d'alimentation (Q1) ; dans lequel le premier commutateur d'alimentation (Q1) est connecté entre n'importe quel nœud dans le premier chemin du dispositif esclave correspondant et le potentiel de masse, et si le résultat de détermination montre que les informations spécifiques sont présentes dans le dispositif esclave correspondant, le premier commutateur d'alimentation (Q1) est activé pour tirer vers le bas le potentiel du premier chemin au niveau bas ; ou dans lequel l'unité de tirage vers le bas (13) comprend une première source de courant ; dans lequel la première source de courant est connectée entre n'importe quel nœud dans le premier chemin du dispositif esclave correspondant et le potentiel de masse, et si le résultat de détermination montre que les informations spécifiques sont présentes dans le dispositif esclave correspondant, la première source de courant fonctionne pour tirer vers le bas le potentiel du premier chemin au niveau bas.

11. Procédé de rétroaction d'informations selon la revendication 1, dans lequel le système de communication série comprend en outre un circuit de tirage vers le bas ; dans lequel le circuit de tirage vers le bas est configuré pour régler un potentiel initial d'un chemin lié formé en connectant en série une pluralité de premiers chemins de la liaison de communication à un deuxième niveau dans un seuil de temps prédéfini ; dans lequel le deuxième niveau est configuré pour être à un niveau bas, et le premier niveau est configuré pour être à un niveau haut.

12. Procédé de rétroaction d'informations selon la revendication 11, dans lequel chacun de la pluralité de dispositifs esclaves (IC1, ..., ICn) comprend en outre une unité de tirage vers le haut ; dans lequel l'unité de tirage vers le haut est connectée entre n'importe quel nœud dans le premier chemin du dispositif esclave correspondant et une alimentation électrique (VDD), et si le résultat de détermination montre que les informations spécifiques sont présentes dans le dispositif esclave correspondant, l'unité de tirage vers le haut est commandée pour tirer vers le haut le potentiel du premier chemin du dispositif esclave jusqu'au premier niveau, de telle sorte qu'un potentiel du chemin lié soit tiré vers le haut du niveau bas au niveau haut, et le dispositif maître reçoit le niveau haut comme premier signal de rétroaction, dans lequel le premier signal de rétroaction indique que les informations spécifiques sont présentes dans le dispositif esclave dans la liaison de communication.

13. Procédé de rétroaction d'informations selon la revendication 12, dans lequel l'unité de tirage vers le haut comprend un premier commutateur d'alimentation ; dans lequel le premier commutateur d'alimentation est connecté entre n'importe quel nœud dans le premier chemin du dispositif esclave correspondant et l'alimentation électrique (VDD), et si le résultat de détermination montre que les informations spécifiques sont présentes dans le dispositif esclave correspondant, le premier commutateur d'alimentation est activé pour tirer vers le haut le potentiel du premier chemin vers le niveau haut ; ou dans lequel l'unité de tirage vers le haut comprend une première source de courant ; dans lequel la première source de courant est connectée entre n'importe quel nœud dans le premier chemin du dispositif esclave correspondant et l'alimentation électrique (VDD), et si le résultat de détermination montre que les informations spécifiques sont présentes dans le dispositif esclave correspondant, la première source de courant fonctionne pour tirer vers le haut le potentiel du premier chemin vers le niveau haut.

14. Procédé de rétroaction d'informations selon la revendication 1, dans lequel chacun de la pluralité de dispositifs esclaves (IC1, ..., ICn) comprend en outre un circuit de sélection de mode (12) et une unité de commande (11) ; dans lequel
une première extrémité du circuit de sélection de mode (12) est connectée au port d'entrée (SDI) du dispositif esclave correspondant, une deuxième extrémité du circuit de sélection de mode (12) est connectée de manière sélective au port de sortie (SDO) du dispositif esclave correspondant ou à une première extrémité de l'unité de commande (11), et une deuxième extrémité de l'unité de commande (11) est connectée au port de sortie (SDO) du dispositif esclave correspondant ;
ou
une première extrémité du circuit de sélection de mode (12) est connectée au port de sortie (SDO) du dispositif esclave correspondant, une deuxième extrémité du circuit de sélection de mode (12) est connectée de manière sélective au port d'entrée (SDI) du dispositif esclave correspondant ou à une première extrémité de l'unité de commande (11), et une deuxième extrémité de l'unité de commande (11) est connectée au port d'entrée (SDI) du dispositif esclave correspondant ;
dans lequel le circuit de sélection de mode (12) est commandé par l'unité de commande (11) pour commander le dispositif esclave afin qu'il fonctionne dans le premier mode ou le deuxième mode.

15. Procédé de rétroaction d'informations selon la revendication 1, dans lequel le dispositif maître transmet l'instruction d'acquérir les informations spécifiques, puis reçoit le signal de rétroaction provenant des dispositifs esclaves, et lorsqu'une durée pendant laquelle le dispositif maître reçoit le signal de rétroaction provenant des dispositifs esclaves est supérieure à un seuil de temps prédéfini, le dispositif esclave est commandé pour quitter le deuxième mode et fonctionner dans le premier mode.

16. Procédé de rétroaction d'informations selon la revendication 1, dans lequel le dispositif maître comprend un port de multiplexage d'entrée-sortie, et le port de multiplexage d'entrée-sortie est configuré pour transmettre l'instruction et recevoir le signal de rétroaction provenant du dispositif esclave ; ou dans lequel le dispositif maître comprend un port de sortie (SDO) et un port d'entrée (SDI) ; dans lequel le port de sortie (SDO) est configuré pour transmettre l'instruction, et le port d'entrée (SDI) est configuré pour recevoir le signal de rétroaction du dispositif esclave, dans lequel le port d'entrée (SDI) et le port de sortie (SDO) du dispositif maître sont tous deux connectés à un port d'entrée (SDI) d'un premier dispositif esclave parmi la pluralité de dispositifs esclaves (IC1, ..., ICn).

17. Procédé de rétroaction d'informations selon la revendication 1, dans lequel les informations spécifiques comprennent des erreurs à signaler par le dispositif esclave ; ou dans lequel chacun de la pluralité de dispositifs esclaves (IC1, ..., ICn) est configuré pour commander une pluralité de chaînes de LED, et les informations spécifiques comprennent des premières informations indiquant qu'une tension d'alimentation de la pluralité de chaînes de LED est insuffisante.

18. Procédé de rétroaction d'informations selon la revendication 1, dans lequel un port de sortie (SDO) d'un dernier dispositif esclave parmi la pluralité de dispositifs esclaves (IC1, ..., ICn) n'est pas connecté au dispositif maître ou un port de sortie (SDO) d'un dernier dispositif esclave parmi la pluralité de dispositifs esclaves (IC1, ..., ICn) est connecté au dispositif maître.

19. Système de communication série, comprenant :
un dispositif maître et au moins une liaison de communication, le dispositif maître et chaque liaison de communication étant connectés en série ; dans lequel chaque liaison de communication comprend une pluralité de dispositifs esclaves (IC1, ..., ICn) connectés en série, et chacun de la pluralité de dispositifs esclaves (IC1, ..., ICn) comprend un port d'entrée (SDI) et un port de sortie (SDO) ;
dans lequel le système de communication série est configuré pour appliquer toutes les étapes du procédé de rétroaction d'informations selon l'une quelconque des revendications 1 à 18, multiplexant le système de communication série, afin de renvoyer un signal de rétroaction au dispositif maître, dans lequel le signal de rétroaction indique si une information spécifique est présente dans la pluralité de dispositifs esclaves (IC1, ..., ICn) dans la liaison de communication.
